(19) Europäisches Patentamt
European Patent Office
Office européen des brevets

(11) **EP 1 115 931 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: **D04H 1/70**, D04H 13/00, D04H 1/00, C03B 37/01

(21) Anmeldenummer: **99944328.6**

(22) Anmeldetag: **03.08.1999**

(86) Internationale Anmeldenummer:
**PCT/EP99/05626**

(87) Internationale Veröffentlichungsnummer:
**WO 00/008244 (17.02.2000 Gazette 2000/07)**

(54) **VORRICHTUNG UND VERFAHREN ZUR HERSTELLUNG VON MINERALWOLLEVLIES**

METHOD AND DEVICE FOR PRODUCING A MINERAL WOOL NONWOVEN FABRIC

DISPOSITIF ET PROCEDE PERMETTANT DE FABRIQUER UNE NAPPE DE LAINE MINERALE

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **03.08.1998 DE 19834963**

(43) Veröffentlichungstag der Anmeldung:
**18.07.2001 Patentblatt 2001/29**

(73) Patentinhaber: **Pfleiderer Dämmstofftechnik International GmbH & Co.**
**92318 Neumarkt/Opf. (DE)**

(72) Erfinder:
• **NABER, Wilfried**
  **D-46483 Wesel (DE)**
• **SCHORR, Ludwig**
  **D-67705 Trippstadt (DE)**

(56) Entgegenhaltungen:
DE-A- 3 921 399          US-A- 3 824 086
US-A- 4 463 048          US-A- 4 917 750

**Beschreibung**

Die Erfindung betrifft eine Vorrichtung zur. Herstellung von Mineralwollevlies mit einem Fallschacht, der Zerfaserungseinrichtungen aufweist und eine Fördereinrichtung zum Transport des Mineralwollevlieses, sowie ein Verfahren zur Herstellung von Mineralwollevlies. Weiterhin betrifft die Erfindung ein Mineralfaserprodukt mit einer definierten Dichteverteilung über der Dicke.

Bei der Herstellung von Mineralwollevlies ist man bestrebt, mit möglichst geringem Energieaufwand ein möglichst hochwertiges Produkt zu erzeugen. Bei der Herstellung von Mineralwollevlies werden die Rohstoffe in geschmolzener Form einer Zerfaserungseinrichtung zugeführt, die Mineralwollefasern erzeugt. Die Mineralwollefasern werden in einen Fallschacht aufgegeben und auf der Fördereinrichtung abgelegt. Die bodenseitig angeordnete Fördereinrichtung ist üblicherweise ein luftdurchlässiges, umlaufendes Transportband. Unter dem luftdurchlässigen Transportband befindet sich eine Absaugvorrichtung, die einen bestimmten Unterdruck erzeugt.

Da die üblicherweise in der Technik verwendeten Zerfaserungseinrichtungen die aus einem schnell rotierenden Körper in Zentrifugalrichtung austretenden Glasfasern mit einem nach unten gerichteten, starken Luftstrom fördern, wird ein beträchtlicher Luftvolumenstrom in den Fallschacht eingeblasen. Dieser Luftstrom trifft auf die bodenseitig im Fallschacht angeordnete Fördereinrichtung auf und wird von dieser in einer Zone hoher Turbulenz nach oben abgelenkt, so daß sich innerhalb des Fallschachtes Rückströmungen bilden. Diese Rückströmungen können nun bereits auf der Fördereinrichtung abgelegte Mineralwollefasern wieder mit nach oben reißen. Um diesem Effekt entgegenzutreten, muß daher ein Sauggebläse mit hoher Leistung bereitgestellt werden, so daß die auf der Fördereinrichtung abgelegten Mineralwollefasern durch einen ausreichenden Unterdruck gehalten werden. Dieser Unterdruck muß ausreichend groß sein, so daß auch bei dickeren Mineralwolleschichten auf der Fördereinrichtung die am weitesten oben gelegenen Schichten noch fixiert werden.

Besteht nun der Wunsch nach einem relativ dicken Mineralwollevlies, so werden mehrere Zerfaserungseinheiten in einem Fallschacht in Förderrichtung der Fördereinrichtung angeordnet. Allerdings steigt hierdurch der Energieverbrauch der Absaugvorrichtung, da bei höheren Schichtdicken des Mineralwollevlieses sich ein relativ hoher Differenzdruck zwischen Absaugvorrichtung und Vliesoberfläche ergibt. Dem kann durch eine erhöhte Absaugeleistung entgegengetreten werden, doch besitzt dies den Nachteil, daß einerseits der Energieverbrauch erhöht wird und andererseits die unten liegenden Bereiche des Mineralwollevlieses so zusammengedrückt werden, daß bereits ein vorverdichtetes Mineralwollevlies den Fallschacht verläßt. Ein derartiger Dichtegradient innerhalb der Dämmstoffdicke ist unerwünscht, da hierdurch der Dämmwert und auch andere Qualitätsdaten wie z.B. Dickenrückstellung und Druckspannung des Produktes sinken.

Damit eine möglichst gleichmäßige Rohdichteverteilung über die Produktdicke errichtet wird, muß die Rohvliesdicke vor dem Härteofen mindestens der doppelten Produktdicke entsprechen.

Aus Erfahrung weiß man, daß die Rohvliesdicke vor dem Härteofen einen erheblichen Einfluß auf die Dichteverteilung und damit auf die Rückfederung komprimierter Produkte hat.

Im Stand der Technik versucht man, den Dichtegradienten über der Dämmstoffdicke zu verringern, indem in dem als Umluftofen ausgebildeten Trocknungsofen eine Luftströmung erst von unten nach oben erfolgt, um die unten liegenden Schichten höherer Dichte aufzulockern.

In der deutschen Patentschrift 39 21 399 wird eine Vorrichtung vorgeschlagen, bei der der Sammelförderer so gestaltet ist, daß die Ablagefläche des Sammelförderers in Förderrichtung jeweils zunimmt. Dies wird erreicht, indem der Sammelförderer aus der Horizontalen heraus geneigt wird, so daß sich die Absaugfläche erhöht und ein geringerer Unterdruck in diesem Bereich erforderlich ist.

Auch die EP 0 406 107 beschreibt ein derartiges Ablageverfahren für Fasern, die durch eine Mehrzahl von Zerfaserungseinheiten erzeugt wurden. Jede Zerfaserungseinheit weist hierbei eine eigene Auffangzone auf und die aufgefangenen Fasern werden durch Förderbänder aus der Auffangzone abtransportiert. Die Bahn der Förderbänder ist konvex und die Flächen der Auffangzonen werden mit zunehmenden Flächengewichten auf diesen Förderbändern größer. Der Nachteil einer derartigen Vorrichtung liegt darin, daß die in der Technik verwendeten Drehwände, die den Fallschacht umgeben, nicht bis zu den Förderbändern ausgebildet sind. Hierdurch entstehen Leckströme, welche die erforderliche Gebläseleistung erhöhen. Daher schließt sich an die Drehwände nach unten hin ein fester Wandabschnitt an. Diese feststehenden Seitenwände führen zu erhöhtem Schmutzanteil im Produkt, da sich in diesen Bereichen Schmutz ansammeln kann und periodisch auf das darunter angeordnete Förderband hinunterfällt. Dies besitzt den weiteren Nachteil, daß durch das in unregelmäßigen Zeitabständen erfolgende Herunterfallen größerer Ansammlungen zudem das entstehende Produkt bezüglich seiner möglichst gleichmäßigen Eigenschaften ungünstig beeinflußt wird.

Darüber hinaus gibt es einen optimalen Abstand zwischen den Zerfaserungsmaschinen und dem Sammelband. Ist der Abstand zu klein, bilden sich auf dem Sammelband starke horizontale Luftströmungen, die die abgelegte Faser zu Bündeln aufrollen können. Ist der Abstand zu groß, bilden sich schon in dem Sammelschacht größere Faserbündel (auch Strähnen genannt), die ebenfalls eine Inhomogenität im Produkt darstellen.

Um beide Effekte auf ein Minimum zu reduzieren, ist ein vorher genau berechneter oder auch empirisch ermittelter Abstand zwischen Zerfaserungsmaschinen und Sammelband einzuhalten.

Die US 4,463,048 beschreibt ein Verfahren und eine Vorrichtung zur Herstellung von Mineralwollevliesen, die mehrere Zerfaserungseinheiten umfaßt, welche die Pasern als Primärvlies auf einen Sammelförderer ablegen, der im Bereich der Faseraufbringung horizontal fördert. Die Förderbänder des Sammelförderers werden anschließend über Umlenkrollen geführt, so daß aus zwei Primärvliesen ein Sekundärvlies entsteht. Da zwei Primärvliese mit der halben Auflage erzeugt werden, ist der Widerstandsbeiwert bei der Durchströmung der Primärvliese etwa halb so groß wie für ein doppeldickes Sekundärvlies, wodurch der vom Gebläse aufzubringende Unterdruck auf etwa 50 % verringert werden kann. Allerdings müssen die verschiedenen Zerfaserungseinrichtungen sehr genau eingestellt werden, um die aufgrund von Querverteilungen erzeugten Dichteunterschiede möglichst gering zu halten. Eine sehr genaue Einstellung der Zerfaserungseinrichtungen ist zudem wichtig, um die Eigenschaftsunterschiede im erzeugten Sekundärvlies, insbesondere in bezug auf deren symmetrische Verteilung über der Dicke des Sekundärvlies gering zu halten.

In der US-A-4917750 wird eine Vorrichtung und ein Verfahren beschrieben, bei dem Mineralwollevlies vor dem Eintritt in einen Härtofen entlang einer im allgemeinen horizontalen Ebene durchtrennt wird. Der obere Abschnitt wird komprimiert und anschließend wieder auf den unteren Abschnitt aufgesetzt, so dass das resultierende Mineralwolleprodukt eine Dichteverteilung über der Dicke besitzt, wobei der obere Bereich eine höhere Dicke aufweist als der darunter liegende untere Bereich. Der Trennschnitt durch das Mineralwollevlies erfolgt in einer im wesentlichen horizontalen Ebene, parallel zum Transportband.

Aus der US-A-3824086 ist das Erzeugen eines sehr dicken Mineralwollevlieses unter Verwendung verschiedener Zerfaserungseinrichtungen bekannt. Dabei legen die einzelnen Zerfaserungseinrichtungen jeweils auf ihnen zugeordnete, individuelle Förderbänder ab. Die so erzeugten einzelnen Mineralwolleabschnitte werden anschließend aufeinander abgelegt.

Der Erfindung liegt die Aufgabe zugrunde, eine Vorrichtung sowie ein Verfahren zur Herstellung von Mineralwollevlies dahingehend zu verbessern, daß sich bei einem geringen Energieaufwand ein Produkt mit verbesserten Produkteigenschaften herstellen läßt.

Diese Aufgabe wird durch eine Vorrichtung sowie ein Verfahren mit den Merkmalen des Anspruchs 1 sowie Anspruchs 7 gelöst.

Das erzeugte Mineralfaserprodukt ist durch die Merkmale des Anspruchs 9 gekennzeichnet.

Der Erfindung liegt der Gedanke zugrunde, daß ein doppeltbreiter Fallschacht vorgesehen ist, der eine geringere Gebläseleistung benötigt, da auf der Fördereinrichtung jeweils ein Mineralwollevlies mit halbem Flächengewicht abgelegt wird. Die Faserfeinheit und das Flächengewicht sind bestimmend für den Strömungswiderstand des Rohvlieses. Des weiteren ist eine Einrichtung vorgesehen, um die Dämmstoffbahn in Längsrichtung in zwei Bahnen zu durchtrennen. Hierdurch werden aus dem doppelt breit angelegten Fallschacht, in dem eine Mineralwollebahn mit doppelter Breite zu der Breite des gewünschten Produkts erzeugt wird, zwei vereinzelte Mineralwollebahnen, die jeweils diejenige Breite besitzen, welche zum Herstellen des gewünschten Produktes benötigt wird. Um die beiden Bahnabschnitte zusammenzuführen, wird eine Fördervorrichtung verwendet, die den ersten Bahnabschnitt so führen kann, daß er auf dem zweiten Bahnabschnitt abgelegt wird.

Indem die Förderwege der erzeugten Bahnabschnitte unterschiedlich lang sind, werden Schwankungen der Querverteilung und Faserverteilung der im Fallschacht erzeugten Mineralwollebahn, aber auch der Schwankungen der Dichte ausgeglichen. Um diesen Vorteil zu erzielen, reichen auch geringe Unterschiede der Länge der Förderwege aus, die vorzugsweise größer gleich dem Maschinenabstand im Fallschacht sein sollten.

Ein wesentlicher Vorteil der erfindungsgemäßen Vorrichtung liegt darin, daß pro Zerfaserungseinrichtung zwei Lagen im Sekundärvlies erzeugt werden. Dies bedeutet, daß das erzeugte Produkt symmetrischere Eigenschaften besitzt und zudem die Abstimmung zwischen mehreren Zerfaserungseinrichtungen deutlich vereinfacht wird. Wenn beispielsweise, wie in der US 4,463,048 oder aber DE 39 21 399 C2 Sekundärvliese aus zwei Primärvliesauflagen erzeugt werden, sind die Deckschichten des Sekundärvlieses mit unterschiedlichen Zerfaserungseinrichtungen erzeugt worden. Dies bedeutet, daß zwei unterschiedliche Zerfaserungseinrichtungen so einzustellen sind, daß möglichst gleiche Paserqualitäten, d.h. Faserfeinheiten und Faserlängen, entstehen. Bei der erfindungsgemäßen Vorrichtung hingegen werden jeweils zwei Schichten im Sekundärvlies mit derselben zerfaserungseinrichtung gebildet und sind die zwei Schichten jeweils so im Produkt angeordnet, daß diese symmetrisch zu der parallel zur oberen und unteren Seite des Produkts verlaufenden Mittelebene angeordnet sind.

Darüber hinaus werden Querverteilungen einzelner Zerfaserungseinrichtungen ausgeglichen. Die Erfahrung zeigt, daß Produkte mit schlechter Qualität meist unzulässig hohe Querverteilungen der abgegebenen Fasermenge besitzen. Derartige Querverteilungen werden in der erfindungsgemäßen Vorrichtung ausgeglichen, wie unten eingehender erläutert werden wird.

Zwar wird in dem doppelt breiten Fallschacht ein Mineralwollevlies erzeugt, das ein geringeres Flächengewicht besitzt und somit auch einen geringen Dichtegradienten über der Dicke des Mineralwollevlies aufweist, doch läßt sich bei der herkömmlichen Herstellung von Mineralwollevlies unter Verwendung eines Fallschachts mit einer darunter angeordneten Fördereinrichtung nie vollständig das Auftreten von Dichtegradienten ausschließen. Wie oben erläutert wurde, ist die Dichte auf der Unterseite der Mineralwollebahn am höchsten. Eine erhöhte Dichte ist zwar mit dem Nachteil verbunden, daß in diesem Bereich die massenbezogenen Wärmedämmeigenschaften abnehmen, doch besitzen Bereiche höherer Dichte den Vorteil einer verbesserten Steifigkeit.

Durch das bevorzugte Wenden des ersten Bahnabschnittes werden der erste Bahnabschnitt und der zweite Bahnabschnitt so zusammengeführt, daß sich die jeweiligen Bereiche mit einer höheren Dichte oben und unten auf der Bahn befinden. Somit lassen sich bei einer geringen mittleren Dichte der Mineralwollebahn und den damit verbundenen guten Isoliereigenschaften Produkte mit einer erhöhten Gestaltfestigkeit erzeugen.

Die erfindungsgemäße Vorrichtung besitzt zudem den Vorteil, daß bestehende Fallschächte leicht umgerüstet werden können. Indem am Boden des Fallschachtes dessen Entfernung zu den Zerfaserungseinrichtungen vorgegeben ist, eine übliche Fördereinrichtung angeordnet ist, verläßt das erzeugte Rohvlies auf dem Niveau der sich daran anschließenden Linie den Fallschacht. Wenn hingegen die in der Technik bekannten Trommeln oder Fördereinrichtungen am Boden des Fallschachtes nachgerüstet werden, verläßt das Rohvlies auf einem deutlich niedrigeren Niveau die Anlage und muß daher erst wieder zurück zur Linie geführt werden. Darüber hinaus besitzt jedoch die einfache Ausgestaltung des Fallschachtes den Vorteil, daß der anfallende Schmutz im Bereich der Fördereinrichtung nicht zu einer Verunreinigung des Produkts führt.

Mit der Vorrichtung sowie unter Verwendung des Verfahrens kann eine Mineralwollebahn oder Mineralwolleplatte aus homogenen Mineralwollefasern hergestellt werden, die eine Dichteverteilung über der Dikke der Mineralwollebahn besitzt. Die Dicke ist hierbei diejenige Dimension, die sich senkrecht zur Breite aber auch Länge der erzeugten Mineralwollebahn und dementsprechend auch senkrecht zu den flächigen Seiten erzeugter Mineralwolleplatten erstreckt. Die Dichteverteilung ist hierbei so ausgebildet, daß in einem kontinuierlichen Verlauf der Dichte über der Dicke des Mineralwolleprodukts eine höhere Dichte im unteren Bereich des Mineralwolleprodukts zunächst kontinuierlich abnimmt, in einen im wesentlichen kontinuierlichen Bereich im Mittelbereich übergeht und im oberen Randbereich wieder kontinuierlich zunimmt, um am oberen Rand oder nahe dem oberen Rand zu einem Maximalwert zu gelangen, der dem Maximalwert am unteren Rand oder nahe dem unteren Rand entspricht. Diese charakteristische Dichteverteilung des Mineralwolleproduktes macht dieses aufgrund der höheren Gestaltfestigkeit nahe der flächigen Ober- und Unterseite besser verarbeitbar, sichert jedoch gute Wärmedämmeigenschaften aufgrund der gleichmäßigen Dichte im mittleren Bereich. Die gewünschte gleichmäßige Dichte über die Produktdicke wird durch das versetzte Übereinanderlegen der beiden Bahnen positiv beeinflußt. Außerdem können asymmetrische Faserverteilungsprobleme durch das Übereinanderlegen der beiden Bahnen ausgeglichen werden, wodurch bei gleicher mittlerer Rohdichte bessere mechanische Produkteigenschaften erzielt werden.

Das wesentliche Merkmal der Mineralwollebahn oder Mineralwolleplatte liegt darin, daß je zwei Schichten bezüglich der Faserqualität und/oder des Bindemittelgehalts identische Eigenschaften aufweisen. Wie bereits oben erläutert wurde, werden durch jede einzelne Zerfaserungseinrichtung zwei Schichten im Sekundärvlies erzeugt, die zudem in bezug auf die parallel zur Ober- und Unterseite des Mineralwolleproduktes verlaufende Symmetrieebene symmetrisch sind und dadurch eine feinere Abstufung der Dichteverteilung erlauben, als dies im Stand der Technik bislang möglich war. Unter identischer Eigenschaften wird verstanden, daß sich die Eigenschaften nur innerhalb der geringen Abweichungen einer einzelnen Zerfaserungseinrichtung bewegen, während der Begriff "Faserqualität" sowohl die Faserfeinheit wie auch Faserlänge bezeichnet, die für die mechanischen Eigenschaften der entsprechenden Dämmstoffe verantwortlich sind.

Die Gestaltfestigkeit der Produkte hängt neben der Rohdichte auch von dem Bindemittelgehalt ab. Da bei hohem Bindemittelanteil im Produkt die Brandeigenschaften negativ beeinträchtigt werden, ist es sehr wichtig, den Bereich hohen Bindemittelgehaltes auf die erforderlichen Randzonen zu begrenzen. Auch dieser Punkt läßt sich mit der beschriebenen Anordnung in besonderer Weise einstellen. Da nur eine Zerfaserungsmaschine die jeweiligen Oberflächen des Produktes bildet, läßt sich der Bereich höherer Bindemittelanteile sowie unterschiedlicher Faserqualitäten, z.B. längere oder feinere Fasern, wesentlich genauer einstellen als in allen anderen bekannten Vorrichtungen und Herstellverfahren.

Bevorzugte Ausführungsformen der Erfindung sind durch die übrigen Ansprüche gekennzeichnet.

Nach einer bevorzugten Ausführungsform erzeugt die Einrichtung zum Durchtrennen der Dämmstoffbahn einen Wasserschneidstrahl, der auf die Dämmstoffbahn gerichtet werden kann. Die Verwendung eines Wasserschneidstrahles hat sich gegenüber den sonst üblichen Schneidvorrichtungen, beispielsweise in Form von Kreissägeblättern, als besonders günstig erwiesen. Die Dämmstoffbahn ist im Bereich des Durchtrennens noch nicht ausgehärtet und mit dem im nicht ausgehärteten Zustand klebrigen Bindemittel versetzt, so daß die Verwendung eines Wasserstrahls den großen Vorteil besitzt, daß die zum Durchtrennen verwendete Arbeitsgerätschaft nicht verkleben oder beeinträchtigt werden kann. Darüber hinaus wird eine Verdichtung des Vlieses an der Schnittkante vermieden.

Eine alternative Einrichtung zum Durchtrennen der Dämmstoffbahn verwendet einen Laserstrahl zum Durchtrennen.

Wenn höhere Produktionsleistungen erwünscht sind, können mehrere Zerfaserungseinrichtungen sowohl in Förderrichtung der Fördereinrichtung wie auch quer zur Fördervorrichtung der Fördereinrichtung versetzt zueinander angeordnet sein.

Nach einer bevorzugten Ausführungsform umfaßt die Fördereinrichtung zum Wenden des ersten Bahnabschnittes eine Wenderolle, um die der erste Bahnabschnitt herumführbar ist. Dies stellt die technisch einfachste Lösung dar, um das erfindungsgemäße Wenden des ersten Bahnabschnittes vor dem Aufsetzen auf den zweiten Bahnabschnitt zu ermöglichen. Aufgrund des guten Zusammenhaltes der erzeugten Mineralwollebahn ist ein einfaches Herumziehen um eine Wenderolle nicht mit der Gefahr verbunden, daß das erzeugte Mineralwollevlies reißen könnte. Daher erübrigen sich weitere, technisch aufwendige Einrichtungen.

Nach einer bevorzugten Ausführungsform ist die Förderrichtung des Primärvlieses im Fallschacht im wesentlichen senkrecht zur Förderrichtung des Sekundärvlieses. Dies erlaubt eine einfache Umrüstung bestehender Produktionsanlagen bei geringen Stillstandzeiten, indem bereits die Vorarbeiten in bezug auf Zerfaserungseinrichtung, Fallschacht und einen Großteil der benötigten Fördereinrichtungen parallel zum laufenden Betrieb an einer bestehenden, linearen Linie durchgeführt werden können.

Vorzugsweise ist der Betrag der Differenz des Förderwegs des ersten Bahnabschnitts zum Förderweg des zweiten Bahnabschnitts größer oder gleich dem Abstand der Zerfaserungseinrichtungen. Diese einfache geometrische Vorgabe hilft wirkungsvoll, bestehende Querverteilungen der Zerfaserungseinrichtungen auszugleichen, indem eine ausreichend hohe Differenz der Förderwege bereitgestellt wird, damit sich die Maldistributionseffekte der Rohdichten einer einzigen Zerfaserungseinrichtung nicht in unerwünschter Weise akkumulieren können.

Mit dem erfindungsgemäßen Verfahren und der Vorrichtung lassen sich Mineralwolleprodukte herstellen, die eine mittlere Dichte von nur 4 bis 11 kg/m$^3$, bevorzugt 6 bis 9 kg/m$^3$ besitzen. Darüber hinaus läßt sich ein Sekundärvlies erzeugen, das vor dem Härteofen mechanische Eigenschaften besitzt, so daß es im Härteofen beim Durchströmen nicht komprimiert wird. Im Härteofen verläuft das Sekundärvlies zwischen einem Oberband und einem Unterband, wodurch die Trocknungsluft bereichsweise von unten nach oben und bereichsweise von oben nach unten durchströmt. Üblicherweise bildet sich aufgrund des Strömungswiderstandes des Vlieses (Produkts) beim Durchströmen von unten nach oben ein Luftkissen zwischen dem Unterband und dem Produkt, während im Bereich des Oberbandes bereits eine Aushärtung des Produkts stattfindet und dabei das Produkt in bezug auf die Dicke verfestigt wird. Ein nachfolgendes Durchströmen des Härteofens von oben nach unten führt anschließend zu einer Bildung eines Luftkissens zwischen dem Mineralwolleprodukt und dem Oberband, so daß das Produkt mit einer um 20 mm bis 40 mm geringeren Dicke als dem Abstand zwischen Oberband und Unterband den Härteofen verläßt. Das erfindungsgemäße Roh- und Sekundärvlies besitzt derart hohe mechanische Eigenschaften, daß es bei der Durchströmung im Härteofen nicht komprimiert wird.

Nachfolgend wird die Erfindung rein beispielhaft anhand der beigefügten Zeichnungen beschrieben, in denen:

Fig. 1    eine Schnittansicht senkrecht und längs zur Förderrichtung eines Fallschachtes mit zwei quer zur Förderrichtung versetzt zueinander angeordneten Zerfaserungseinrichtungen darstellt;

Fig. 1a    eine Draufsicht auf den Fallschacht mit Zerfaserungseinrichtungen zeigt, die in Förderrichtung des Fallschachts angeordnet sind;

Fig. 1b    eine Draufsicht auf den Fallschacht mit Zerfaserungseinrichtungen darstellt, die sowohl quer wie auch längs zur Förderrichtung versetzt zueinander angeordnet sind;

Fig. 2    eine Draufsicht auf den Fallschacht gemäß Fig. 1 sowie die sich daran anschließende Fördervorrichtung zeigt;

Fig. 3    eine schematische Seitenansicht der Wendeeinrichtung sowie der Zusammenführung der Dämmstoff bahnen darstellt;

Fig. 4    schematisch die Dichteverteilung über der Dicke des mit der erfindungsgemäßen Vorrichtung bzw. dem erfindungsgemäßen Verfahren erzeugten Mineralwolleproduktes darstellt; und

Fig. 5    Beispiele einer Querverteilung der Fasern im Fallschacht zeigt.

In den nachfolgenden Zeichnungen werden gleiche oder ähnliche Elemente jeweils mit denselben Referenzziffern bezeichnet.

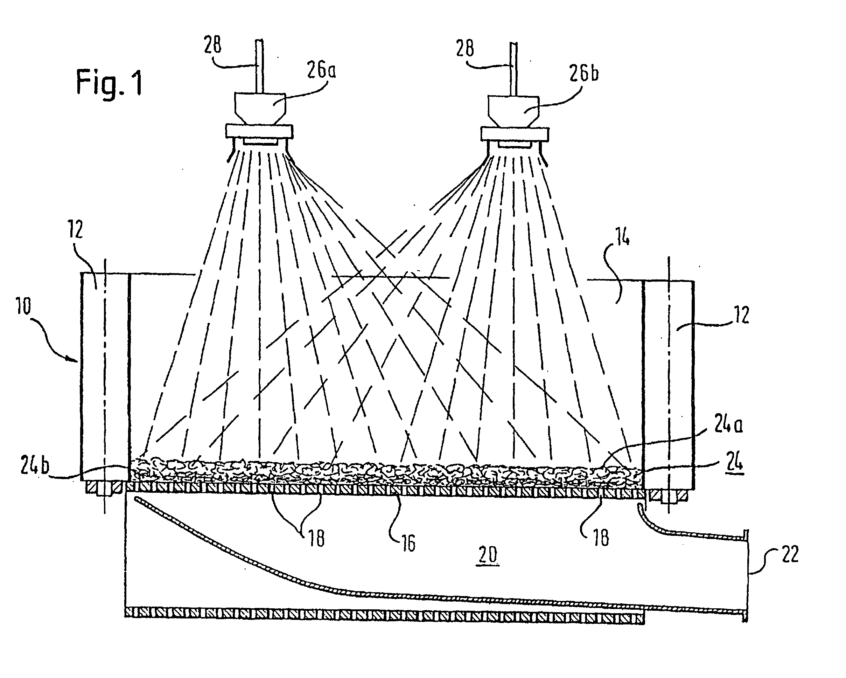

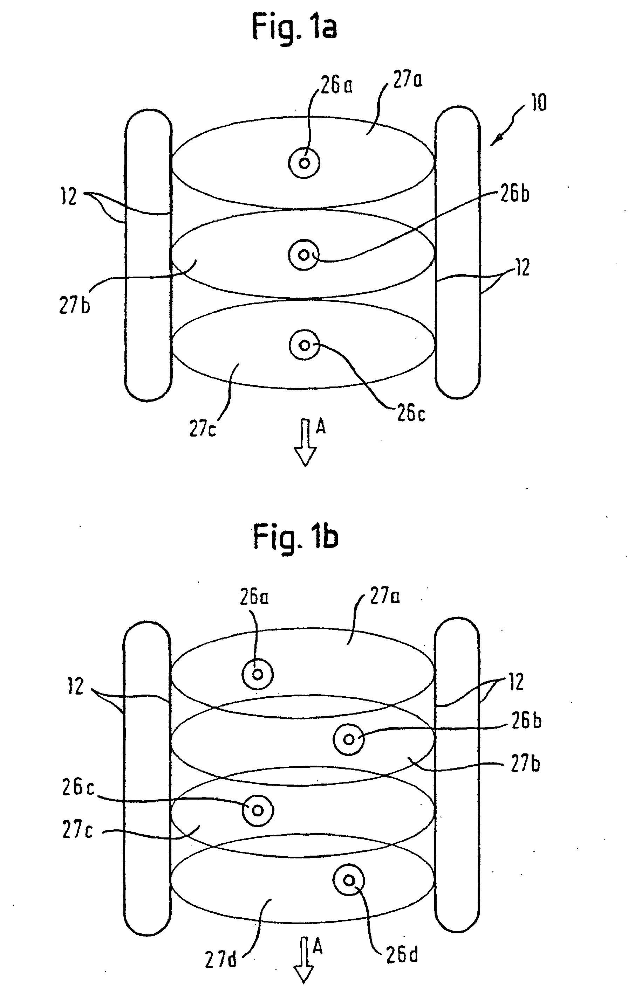

In Fig. 1 ist eine Schnittdarstellung durch einen Fallschacht dargestellt. Der Schnitt verläuft in einer vertikalen Ebene senkrecht zur Abförderrichtung der im Fallschacht erzeugten Mineralwollebahn. Der Fallschacht 10 besteht aus Seitenwänden 12 sowie einer nicht dargestellten Vorderwand und einer Rückwand 14. Diese Wände begrenzen den Fallschacht mit einem im wesentlichen rechteckigen Querschnitt. Bevorzugt sind die Wände 12, 14 um rotierbare Rollen gelegt und führen um den gesamten Fallschacht 10 herum oder abschnittsweise um Bereiche des Fallschachtes herum eine Bewegung aus, so daß die Wände um außerhalb des Fallschachts angeordnete, senkrecht verlaufende Abschabeeinrichtungen vorbeigeführt werden, so daß Mineralwollefasern, die an den Wänden des Fallschachts anhaften, jeweils entfernt werden können. Die genaue Geometrie und Ausgestaltung des Fallschachts ist jedoch für das Wesen der vorliegenden Erfindung nicht ausschlaggebend; wesentlich ist lediglich, daß die drehenden Wände des Fallschachts 12, 14 zur Faser-Fördereinrichtung hin gut abdichten und damit keine zusätzlichen Leckströme in den Fallschacht eindringen können.

Die Fördereinrichtung besteht aus einem Paletten-Förderband 16, das um geeignete Antriebsrollen bzw. mitlaufende Rollen herum gelegt ist und eine Transportrichtung in der Zeichenebene in Fig. 1 bzw. in Pfeilrichtung A in den Figuren 1a und 1b ausführt. Das Förderband 16 ist ein Endlosband mit Luftdurchtrittsöffnungen 18, durch die Luft durch das Förderband hindurch abgesaugt werden kann.

Zur Absaugung dient eine schematisch dargestellte Absaugeöffnung 22, die sich in einer Unterdruckkammer 20 befindet. Die Absaugeöffnung 22 ist mit einem geeigneten Gebläse verbunden, das im Betrieb Luft aus der Unterdruckkammer 20 absaugt und aus dem Bereich der Vorrichtung abführt. Ist das an der Absaugeöffnung 22 angeschlossene Gebläse in Betrieb, so strömt die Luft durch die Luftdurchtrittsöffnungen 18 im Förderband 16 hindurch in die Unterdruckkammer und wird aus dieser abgefördert. Hierdurch wird im Bereich der auf der Fördereinrichtung 16 aufliegenden Primärvlies 24 ein geringer Unterdruck erzeugt, wodurch die auf der Fördereinrichtung 16 aufliegenden Fasern in einem festen Verbund als Mineralwollebahn gehalten werden.

Je dicker das Primärvlies 24 ist, desto höher ist der Druckverlust durch die Mineralwollebahn, so daß demgemäß die Gebläseleistung des mit der Absaugeöffnung 22 verbundenen Gebläses größer gewählt werden muß. Hierbei ist auf die am weitesten oben liegende Schicht 24a des Primärvlies 24 abzustellen, da auch die Fasern in der Schicht 24a daran gehindert werden sollen, in unerwünschter Weise im Fallschacht in Richtung Zerfaserungsmaschine nach oben geblasen zu werden. Die Rückströmung im Fallschacht entsteht dadurch, daß das geschmolzene Glas durch Zentrifugalkraft aus einer gelochten Schleuderscheibe zu Primärfäden ausgeschleudert und anschließend durch einen ringförmig angeordneten, erdgasbeheizten Brenner in Verbindung mit einer ringförmigen Druckluftdüse zu feinen Fasern nach unten ausgezogen wird. Somit wird ein beträchtlicher Luftstrom in dem Pallschacht erzeugt, der nach dem Auftreffen auf der Fördereinrichtung bzw. des darauf abgelagerten Primärvlies in einer turbulenten Weise verwirbelt und in Form einer Rückströmung wieder teilweise nach oben gerichtet wird. Diese Rückströmung kann einen Teil der erzeugten Mineralfasern in einer unkontrollierten Weise nach oben fördern, so daß man bestrebt ist, derartige Rückströmungen weitgehend auszuschalten.

Eine gewisse Rückströmung der Fasern in der Sammelkammer des Fallschachts ist erwünscht, um eine Verfilzung des Rohvlieses und eine bessere Verteilung der zurückgeführten Randstreifen zu erreichen. Um ein unerwünschtes Maß an Rückströmungen zu vermeiden, muß eine beträchtliche Gebläseleistung installiert werden, um durch die Fördereinrichtung hindurch die erforderliche Prozeßluft abzuführen. Je höher die Förderleistung der Fördereinrichtung bei einer vorgegebenen Absaugfläche ist, desto stärker wirkt der Druck auf die unteren, d.h. direkt auf der Fördereinrichtung 16 aufliegenden Schichten von Mineralfasern 24b. Daher entsteht bei einem zu hohen Flächengewicht des Primärvlies 24 und dem damit verbundenen hohen Druckverlust derselben eine höhere Dichte in der unten liegenden Schicht 24b.

Bei den bisher bekannten Fallschächten (ohne Pendelableger) wird ein Primärvlies hergestellt, das der Breite des Endproduktes entspricht. Der "Doppelbreite Fallschacht" hat bei gleichen Produkten und gleichen Zerfaserungsbedingungen den Vorteil, daß durch die doppelte Breite das Flächengewicht halbiert und außerdem die Luftgeschwindigkeit im Primärvlies durch die doppelte Absaugfläche auf 50 % reduziert wird. Der Druckverlust errechnet sich nach der Gleichung

$$\Delta p = \xi \cdot \frac{\rho}{2} \, w^2$$

mit dem Widerstandsbeiwert $\xi$, der Dichte $\rho$ der abgesaugten Luft und der Luftgeschwindigkeit w durch das Mineralwollevlies. Beim doppeltbreiten Fallschacht wird nur die halbe Luftgeschwindigkeit w beim Absaugen benötigt und darüber hinaus halbiert sich der Widerstandswert aufgrund der halbierten Dicke des Primärvlieses. Dies erzeugt ein Vlies mit hohem Rückstellvermögen, weil aufgrund des geringen Unterdrucks die Fasern nur sehr wenig mechanisch belastet werden und weniger brechen. Weiterhin lassen sich auf diese Weise auch sehr geringe Rohdichten zwischen 4 und 11 kg/m$^3$ mit sehr guten Wärmedämmeigenschaften herstellen.

Somit beträgt der durchschnittliche Druckverlust durch das Primärvlies im "Doppelbreiten Fallschacht" gegenüber dem Standart-Fallschacht mit Normalbreite nur noch 12,5% ($\hat{=}$ 1/8) und gegenüber einem Doppeltrommelschacht mit Normalbreite noch 50% ($\hat{=}$ 1/2) was außer der größeren Rohvliesdicke noch eine erhebliche Energieeinsparung zur Folge hat.

Die beiden in Fig. 1 dargestellten Zerfaserungseinrichtungen 26a und 26b sind seitlich versetzt zueinander angeordnet. Durch das Vorsehen der versetzt nebeneinander angeordneten Zerfaserungseinrichtungen 26a, 26b läßt sich die Faserverteilung in Querrichtung besonders gut steuern.

Die Breite des in Fig. 1 dargestellten Fallschachtes 10 kann etwa 1,5 Meter oder auch mehr betragen. Selbstverständlich ist es auch möglich, daß nicht nur eine, sondern zwei oder mehr zerfaserungseinrichtungen nebeneinander angeordnet werden.

Die in der Schnittansicht in Fig. 1 gezeigte Anordnung der Zerfaserungseinrichtungen entspricht derjenigen Anordnung, die in Draufsicht in Fig. 1b dargestellt ist. Die Zerfaserungseinrichtungen 26a, 26b, 26c und 26d sind in Bewegungsrichtung A der Fördereinrichtung sowohl in Längsrichtung wie auch in Querrichtung versetzt zueinander angeordnet. Aufgrund der unter dem luftdurchlässig ausgebildeten Förderband angeordneten Luftabsaugung bilden sich trotz der versetzten Anordnung der Zerfaserungseinrichtung jeweils Faserstrümpfe 27a bis 27d heraus, die eine im wesentlichen symmetrische Abgabe der erzeugten Glasfasern in dem schematisch in den Fig. 1a und 1b umschriebenen Bereich erzeugt.

Alternativ ist jedoch auch die in Fig. 1a gezeigte Anordnung möglich, bei welcher die Zerfaserungseinrichtungen 26a bis 26c jeweils in Förderrichtung der Fördereinrichtung und somit parallel zur Richtung A angeordnet sind.

Der wesentliche Gesichtspunkt der in Fig. 1, 1a und 1b dargestellten Fallschächte ist, daß sie jeweils eine Breite besitzt, die dem Doppelten der Breite entspricht, die für das herzustellende Produkt in der sich anschließenden Produktionslinie benötigt wird.

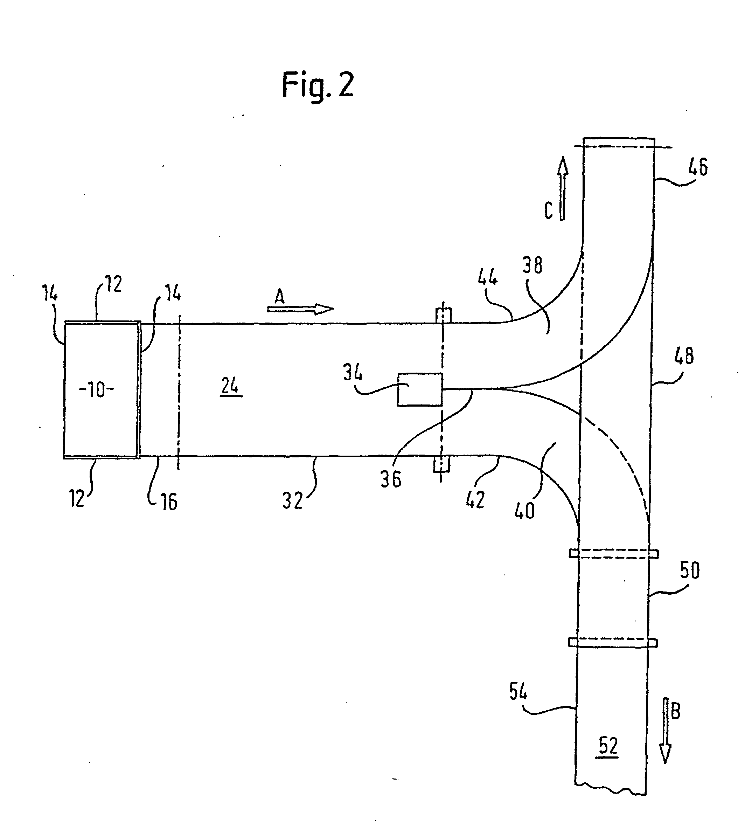

Fig. 2 zeigt schematisch die weitere Verarbeitung der in dem Fallschacht 10 gemäß Fig. 1, 1a oder 1b dargestellten Primärvlies 24. Nach dem Verlassen des schematisch durch die Wände 12, 14 dargestellten Fallschachtes 10 wird das Primärvlies 24 auf einer sich an die Fördereinrichtung 16 anschließenden Fördereinrichtung 32 in Pfeilrichtung A bewegt. Die Fördereinrichtung 32 besitzt, wie der Fallschacht selbst und auch die Fördereinrichtung 16 eine doppelte Breite und läuft mit derselben Geschwindigkeit wie die später beschriebene Produktionslinie.

Im folgenden wird bei der Beschreibung des Materialflusses auf verschiedene, aneinander angrenzende Fördereinrichtungen Bezug genommen. Es sollte jedoch deutlich sein, daß die jeweiligen Bereiche, in denen die einzelnen Fördereinrichtungen aneinander angrenzen, beliebig gewählt werden können und sich auch größere Einheiten verwirklichen lassen, als dies in der folgenden Beschreibung dargelegt ist. Die Wahl der einzelnen Fördereinrichtungen richtet sich nach verschiedenen praktischen Gesichtspunkten wie Wartungsfreundlichkeit, der Möglichkeit, im Anfahrbetrieb eine nachfolgende Fördereinrichtung erst dann in Bewegung zu setzen, wenn sich stationäre Zustände eingestellt haben und vieles mehr.

Das doppelt breite Primärvlies 24 wird auf der Fördereinrichtung 32 einer Schneidvorrichtung 34 zugeführt, welche das kontinuierlich hergestellte Primärvlies 24 in Längsrichtung in zwei Bahnabschnitte 38 und 40 durchtrennt. Als Schneidvorrichtung kann beispielsweise ein stark gebündelter Wasserstrahl unter hohem Druck eingesetzt werden, jedoch sind in der Technik auch andere Lösungen zum Durchtrennen des kontinuierlich geförderten Primärvlies 24 denkbar wie z.B. eine Laserstrahleinrichtung oder die Verwendung einer Bandsäge oder Kreissäge. Wie in Fig. 2 angedeutet ist, wird durch die Schneidvorrichtung 34 ein Schnitt 36 in Längsrichtung des Primärvlies 24 erzeugt, der das Primärvlies 24 in einen ersten Bahnabschnitt 38 sowie einen zweiten Bahnabschnitt 40 unterteilt, die jeweils dieselbe Breite besitzen. Der zweite Bahnabschnitt 40 wird auf einer Fördereinrichtung 42 bewegt, die den zweiten Bahnabschnitt 40 um 90° zur ursprünglichen und durch den Pfeil A dargestellten Förderrichtung dreht, bis der zweite Bahnabschnitt 40 in Pfeilrichtung B verläuft. Die Pfeilrichtung B gibt die Bewegungsrichtung der in Fig. 2 nicht mehr dargestellten, nachfolgenden Produktionslinie an, die je nach dem gewünschten Produkt in verschiedenen nachfolgenden Bearbeitungsschritten das Mineralwollematerial weiter verarbeitet. Auch der erste Bahnabschnitt 38 wird auf einer Fördereinrichtung 44 bewegt, wobei auch der erste Bahnabschnitt 38 um 90° in der Horizontalen umgelenkt wird, bis dieser in der Richtung C verläuft, die parallel zur Bewegungsrichtung B ist, aber eine entgegengesetzte Bewegungsrichtung besitzt. Die Fördereinrichtungen 42 und 44 verwenden konische Rollen, um die geförderten Bahnabschnitte 38 und 40 umzulenken.

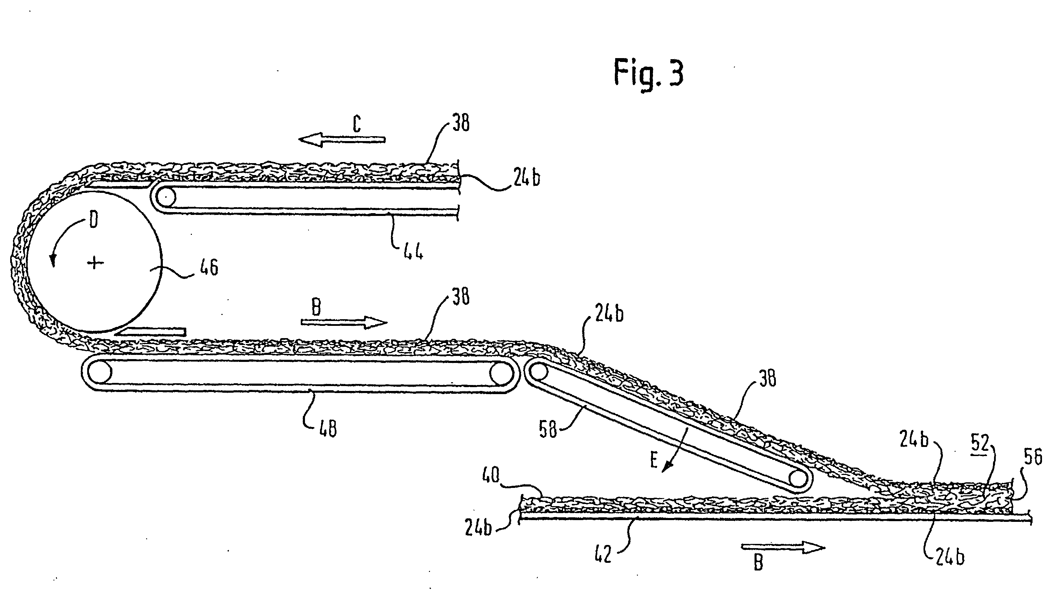

Der erste Bahnabschnitt 38 gelangt anschließend in eine Wendeeinrichtung 46. Die Wendeeinrichtung 46 sorgt dafür, daß der erste Bahnabschnitt 38 um eine geeignete Umlenkrolle herumgeführt wird, so daß er die Wendeeinrichtung 46 mit derselben Bewegungsrichtung B wie der zweite Bahnabschnitt verläßt. Die Wendeeinrichtung 46 ist in Fig. 3 eingehender erläutert. In dem in Fig. 2 dargestellten Beispiel ist die Wendeeinrichtung 46 so ausgelegt, daß der erste Bahnabschnitt 38 von der Fördereinrichtung 44 nach unten bewegt wird, so daß die sich an die Wendeeinrichtung 46 anschließende Fördereinrichtung 48 unter der Fördereinrichtung 44 verläuft.

Der erste Bahnabschnitt 38 gelangt schließlich auf eine sich an die Fördereinrichtung 48 anschließende weitere Aufgabevorrichtung 50, welche den in der Wendeeinrichtung 46 gewendeten Bahnabschnitt 38 auf dem zweiten Bahnabschnitt 40 ablegt. Somit besitzt das Sekundärvlies 52 im Bereich 54 der gesamten Produktionseinrichtung die annähernd doppelte Dicke und das doppelte Flächengewicht im Vergleich zum Primärvlies 24, das im Fallschacht erzeugt wurde.

Wie oben erläutert wurde, wird in einem Fallschacht mit Absaugeeinrichtung ein Primärvlies erzeugt, das einen Dichtegradienten über der Dicke aufweist. Die in Fig. 1 dargestellte unten liegende Schicht 24b weist dabei eine höhere Dichte als die darüber liegenden Schichten des Primärvlies 24 auf. Durch das Wenden des ersten Bahnabschnittes 38 in der Wendeeinrichtung 46 und das anschließende Ablegen des gewendeten, ersten Bahnabschnittes 38 auf dem zweiten Bahnabschnitt 40 ist nun eine Mineralwollebahn 52 (Sekundärvlies) entstanden, die eine Sandwichstruktur aufweist. Dies bedeutet, daß sowohl der unten liegende Schichtbereich wie auch oben liegende Schichtbereich, die beide aus den Schichten 24b des erzeugten Primärvlies 24 gebildet sind, eine höhere Dichte und somit Gestaltfestigkeit aufweisen. Der dazwischen liegende Bereich 56 besitzt eine geringere Dichte, aber auch geringere Gestaltfestigkeit, wodurch jedoch die Produkteigenschaften nicht negativ beeinflußt werden. Im Gegenteil erhöht sich der massenbezogene Wärmedämmwert mit abnehmender Rohdichte des Mineralwolleproduktes. Eine sehr ähnliche Verteilung bildet sich in bezug auf die Bindemittelmenge im Mineralwolleprodukt heraus, die in den Randschichten des Sekundärvlies an oder in der Nähe der Oberseite und Unterseite des Sekundärvlies 54 höher ist.

Ein weiterer Vorteil der Erfindung wird aus Fig. 2 ersichtlich. Wie bereits erläutert wurde, verläuft die weitere Produktionslinie in der Richtung B, d.h. rechtwinklig zur Förderrichtung des Primärvlies aus dem Fallschacht. Hierdurch läßt sich eine bestehende Produktionseinrichtung leicht umrüsten, da nur ein entsprechender Platz neben der Produktionslinie geschaffen werden muß.

Fig. 3 stellt eine schematische Seitenansicht der Wendeeinrichtung sowie der Zusammenführung der Dämmstoffbahnen dar. Die Ansicht ist hierbei in Pfeilrichtung A in Fig. 2 dargestellt und dahingehend vereinfacht, daß die bogenförmig ausgebildeten Fördereinrichtungen 38 und 40, die sich an die Schneidvorrichtung 34 (siehe Fig. 2) anschließen, nur teilweise dargestellt sind.

Aus der Position der Fördervorrichtungen 42 und 44 folgt jedoch bereits, daß diese so ausgebildet sind, daß sich nach dem Durchtrennen des Primärvlies 24 in der Schneidvorrichtung 34 und dem getrennten Weiterbefördern des ersten Bahnabschnittes sowie zweiten Bahnabschnittes der in Fig. 3 gezeigte Niveauunterschied einstellt. Hierbei wird der erste Bahnabschnitt 38 auf eine ausreichende Höhe über den zweiten Bahnabschnitt 40 gebracht, so daß der erste Bahnabschnitt um die Umlenkrolle 46 herum nach unten gewendet werden kann und nach dem Wenden auf den auf einem tieferen Niveau geführten zweiten Bahnabschnitt abgelegt werden kann.

Wie in Fig. 3 ersichtlich ist, besteht die Wendeeinrichtung 46 aus einer rotierenden Walze, die in Pfeilrichtung D durch eine geeignete Antriebseinrichtung angetrieben wird, so daß ihre Umfangsgeschwindigkeit der Fördergeschwindigkeit C des ersten Bahnabschnittes auf der Fördervorrichtung 44 entspricht. Der um die Umlenkrolle 46 herumgeführte Bahnabschnitt wird auf einer darunter angeordneten und auch in Fig. 2 dargestellten Fördereinrichtung 48 aufgenommen und parallel zum zweiten Bahnabschnitt 40, jedoch auf einem darüber liegendem Höhenniveau in Pfeilrichtung B geführt. Die Fördereinrichtungen sind zudem in Pfeilrichtung A (siehe Fig. 1) verfahrbar, um einen möglichen Achsversatz auszugleichen und das doppeltdicke Sekundärvlies 52 mittig der Linie zu halten.

Anschließend wird der nun gewendete, erste Bahnabschnitt 38 auf dem zweiten Bahnabschnitt abgelegt. Hierzu ist eine weitere Fördereinrichtung 58 vorgesehen, die sich an die Fördereinrichtung 48 anschließt, den ersten Bahnabschnitt 38 übernimmt und in Pfeilrichtung E schwenkbar ausgeführt ist, um auch bei der Verwendung verschieden dicker Dämmstoffbahnen ein möglichst exaktes Ablegen des ersten Bahnabschnittes auf dem zweiten Bahnabschnitt zu ermöglichen. Die Fördereinrichtung 58 reicht bis nahe an die Oberfläche des zweiten Bahnabschnittes 40 und fördert den ersten Bahnabschnitt auf den zweiten Bahnabschnitt, so daß ein Sekundärvlies als Mineralwollebahn 52 mit doppelter Dicke im Vergleich zu dem ersten und zweiten Bahnabschnitt sowie auch im Vergleich zum Primärvlies 24 entsteht.

Eine homogene Verbindung der beiden Bahnabschnitte erfolgt, da sich die in Fig. 3 dargestellte Zusammenführung noch vor dem nachfolgenden Eintritt des Sekundärvlies 52 in einen Härteofen befindet, in dem der bei der Zerfaserung zugegebene Härter, insbesondere ein Phenolharz, ausgehärtet wird und zu einem festen Verbund der Mineralwollefasern führt.

Die in Fig. 3 dargestellte Stromführung des ersten sowie zweiten Bahnabschnittes mit der Bewegung der Umlenkrolle 46, so daß der erste Bahnabschnitt von oben nach unten gefördert wird, stellt eine sehr einfach durchzuführende Betriebsvariante dar; allerdings ist es selbstverständlich in gleicher Weise möglich, den ersten Bahnabschnitt nach oben umzulenken, wodurch der Niveauunterschied geschaffen wird, der anschließend benötigt wird, um durch die Fördereinrichtung 58 den ersten Bahnabschnitt auf den zweiten Bahnabschnitt aufzusetzen.

Der Vorteil der mit der beschriebenen Vorrichtung erzeugten Mineralwollebahn liegt darin, daß die Bereiche höherer Dichte 24b oben und unten in der Mineralwollebahn 52 angeordnet sind und zu einer Sandwichstruktur führen, die eine gute Gestaltfestigkeit und Verarbeitbarkeit mit einem hohen Dämmwert vereinbaren kann.

Ein weiterer Vorteil liegt darin, daß der erste Bahnabschnitt und der zweite Bahnabschnitt eine unterschiedliche Wegstrecke zurücklegen, bevor die beiden Bahnabschnitte wieder miteinander vereinigt werden. Dies besitzt den Vorteil, daß im Fallschacht auftretende querbezogene Massenverteilungen (Querverteilungen) der von den Zerfaserungseinrichtungen abgegebenen Fasern ausgeglichen werden, da sich lokale Extremwerte der im Fallschacht erzeugten Mineralfasermengen ausgleichen.

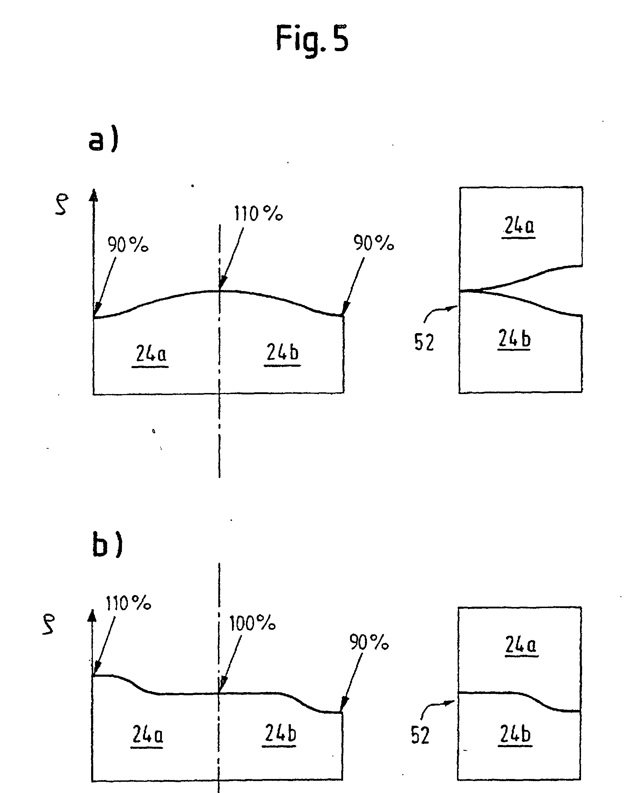

Die Querverteilung, gemessen als Prozentangabe bezogen auf den Mittelwert, bestimmt neben der Faserqualität und dem Bindemittelgehalt im wesentlichen die Produktqualität. So führt eine, durch die Querverteilung verursachte, geringere Rohdichte der Bahn zu einer schlechten Produktqualität. Ist die Querverteilung hinreichend genau eingestellt worden, so kann die mittlere Rohdichte bei Einhaltung sämtlicher zugesicherter Produkteigenschaften reduziert werden. Dies soll anhand der Fig. 5, die Beispiele der üblichen Querverteilungen der Fasern im Fallschacht zeigt, erläutert werden.

Bei einer Primärverteilung entsprechend der Darstellung in Fig. 5a ergibt sich eine Rechts/Linksquerverteilung der Fasern im Fallschacht und somit Rohdichten ρ auf der Linie, die prozentual entsprechend der Primärverteilung ist, so daß sich kein Vorteil ergibt, wobei die ausgleichende Wirkung aufgrund des Längsversatz der Bahnabschnitte nicht berücksichtigt ist.

Eine Primärverteilung der Rohdichten ρ entsprechend Fig. 5b tritt besonders bei breiten Produktionslinien auf und würde sich durch das erfindungsgemäße Verfahren und die erfindungsgemäße Vorrichtung exakt ausgleichen, wie aus der Darstellung der mittig durchtrennten und übereinandergelegten Mineralwollebahn auf der rechten Seite in Fig. 5b ersichtlich ist.

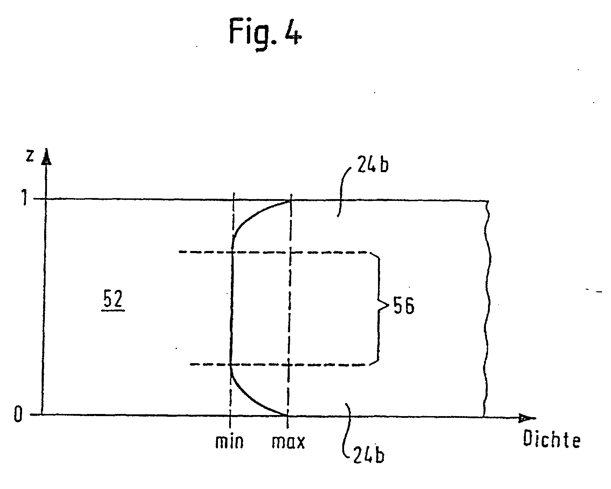

Fig. 4 stellt schematisch den Dichteverlauf über dem erzeugten Mineralwolleprodukt dar. Hierzu ist in Fig. 4 die lokale Dichte über der normierten Dicke z der Mineralwollebahn dargestellt. Wie sich aus der schematischen Darstellung ergibt, ist im oberen Bereich sowie unteren Bereich (z = 1, z = 0) die Dichte jeweils höher und erreicht einen Maximalwert max, der über dem im mittleren Bereich 56 der Mineralwollebahn vorhandenen Dichtewert min liegt. Wie bereits ausführlich dargelegt wurde, besitzt somit der Großteil des erzeugten Mineralwolleproduktes die homogene Dichte min, die gute Wärmedämmeigenschaften sicherstellt, und liegen nur in den schematisch mit 24b dargestellten Randbereichen höhere Dichten bis hin zum Maximalwert max und folglich auch höhere Bindemittelanteile vor, welche dem Mineralwasserprodukt eine höhere Gestältfestigkeit verleihen.

Gemäß einer weiteren Ausführungsform der Erfindung kann zusätzlich ein Pendelableger eingesetzt werden. Die Kombination mit Pendelableger ermöglicht es, bei relativ geringer Rohvliesdicke im "Doppelbreiten Fallschacht" auf ein 90° zur Fallschachtachse angeordnetes Förderband eine mehrlagige Rohfilzbahn abzulegen. Mit diesem Verfahren sind dem Flächengewicht der Produkte auf der Linie keine Grenzen mehr gesetzt.

Mit Hilfe der erfindungsgemäßen Vorrichtung und des erfindungsgemäßen Verfahrens läßt sich die Querverteilung auf der Linie bezogen auf den Mittelwert um etwa 3,5 % bis 4 % verbessern, wie erste Betriebserfahrungen gezeigt haben.

Für die Verbesserung der Querverteilung auf der Linie bezogen auf den Mittelwert auf den oben genannten, aus Betriebserfahrungen gewonnenen Wert von etwa 3,5 % bis 4 % ist es allerdings notwendig, daß bei einem Aufeinanderlegen der Dämmstoffbahnabschnitte ein ausreichender Längsversatz vorliegt. Eine Analyse der Primärverteilung ergab, daß bei einem Aufeinanderlegen ohne Längsversatz die Querverteilung sich nur um die Hälfte des oben genannten Wertes verbessern konnte.

Wie sich ebenfalls aus Betriebserfahrungen ergab, lag der benötigte Unterdruck in den Absaugkammern sogar noch unter den vorausberechneten Werten. Die für Produktumstellungen häufig notwendige Umstellung der Querverteilung in den bekannten Ausführungen konnte deutlich reduziert werden. Darüber hinaus fand durch das sehr hohe Rückstellvermögen des Rohvlieses auch bei Rohdichten kleiner gleich 7 kg/m$^3$ keine Komprimierung des Vlieses durch die Durchströmung im nachgeschalteten Härteofen statt.

Durch die Verbesserung der mechanischen Eigenschaften des Primärvlieses kann die Überstärke auf der Linie auf etwa die Hälfte reduziert werden. Die dadurch bedingten höheren Rohdichten im Härteofen reduzieren das örtliche Komprimieren des Produkts durch die Durchströmung. Bei den bekannten Ausführungen führt die unterschiedliche Querverteilung besonders bei geringen Rohdichten im allgemeinen zu örtlich unterschiedlichen Dicken auf der Linie.

**Patentansprüche**

1. Vorrichtung zur Herstellung von Mineralwollevlies (52) umfassend:

   - einen Fallschacht (10), der

   - mindestens eine Zerfaserungseinrichtung (26a, 26b) aufweist; sowie

   - eine Fördereinrichtung (16) zum Transport des erzeugten Mineralwollevlieses (24), wobei die Fördereinrichtung den ersten Bahnabschnitt (38) so führen kann, dass der erste Bahnabschnitt (38) auf dem zweiten Bahnabschnitt (40) zur Erzeugung eines Sekundärvlies (52) abgelegt wird; wobei der Förderweg des ersten Bahnabschnitts (38) ungleich dem Förderweg des zweiten Bahnabschnitts (40) ist;

   **dadurch gekennzeichnet, dass**

   - der Fallschacht (10) doppeltbreit ist;

   - eine Einrichtung (34) vorgesehen ist, um das erzeugte Mineralwollevlies in Längsrichtung in einen ersten Bahnabschnitt (38) und einen zweiten Bahnabschnitt (40) zu durchtrennen; und

- die Fördereinrichtung (46, 48, 58) zum Wenden des ersten Bahnabschnitts (38) eine Wenderolle (46) umfasst, um die der erste Bahnabschnitt (38) herumführbar ist, wobei der erste Bahnabschnitt (38) so gewendet wird, dass die Unterseite des ersten Bahnabschnitts (38) oben zu liegen kommt; und

- jede der mindestens einen Zerfaserungseinrichtung (26a, 26b) ein Mineralwollevlies (24) erzeugt, das im Sekundärvlies (52) zwei Lagen bildet.

2. Vorrichtung nach Anspruch 1,
   **dadurch gekennzeichnet, dass**
   die Einrichtung (34) zum Durchtrennen des erzeugten Mineralwollevlies (24) einen Wasserschneidstrahl erzeugt, der auf das Mineralwollevlies gerichtet werden kann.

3. Vorrichtung nach einem der Ansprüche 1 oder 2,
   **dadurch gekennzeichnet, dass** zusätzlich mehrere Zerfaserungseinrichtungen sowohl in Förderrichtung der Fördereinrichtung (16) wie auch quer zur Förderrichtung der Fördereinrichtung (16) versetzt zueinander angeordnet sind.

4. Vorrichtung nach einem der Ansprüche 1 bis 3,
   **dadurch gekennzeichnet, dass**
   mehrere Zerfaserungseinrichtungen (26a, 26b) in Förderrichtung (A) der Fördereinrichtung (16) des Fallschachts hintereinander angeordnet sind.

5. Vorrichtung nach einem der Ansprüche 1 bis 4,
   **dadurch gekennzeichnet, dass**
   die Förderrichtung (A) des erzeugten Mineralwollevlieses (24) im Fallschacht im wesentlichen senkrecht zur Förderrichtung (B) des Sekundärvlieses (52) ist.

6. Vorrichtung nach einem der Ansprüche 1 bis 5,
   **dadurch gekennzeichnet, dass**
   der Betrag der Differenz des Förderwegs des ersten Bahnabschnitts (38) zum Förderweg des zweiten Bahnabschnitts (40) größer oder gleich dem Abstand der Zerfaserungseinrichtungen (26a, 26b) ist.

7. Verfahren zur Herstellung von Mineralwollevlies (52) umfassend die Schritte:

   - Zerfasern des Rohmaterials in mindestens einer Zerfaserungseinrichtung (26a, 26b);

   - Ablegen der Fasern auf einem Sammelförderer (16) eines Fallschachtes (10) zur Bildung eines Primärvlies (24) ;

   - Durchtrennen des Primärvlies in Längsrichtung, so dass ein erster Bahnabschnitt (38) und einer zweiter Bahnabschnitt (40) entsteht;

   - Transportieren des ersten Bahnabschnitts (38) und des zweiten Bahnabschnitts (40) derart, dass ein Längsversatz der Förderwege zwischen Fallschacht und Härteofen entsteht;

   - Wenden des ersten Bahnabschnittes (38), so dass die Unterseite des ersten Bahnabschnitts (38) oben zu liegen kommt.

   - Ablegen des ersten Bahnabschnittes (38) auf dem zweiten Bahnabschnitt (40) zum Bilden eines Sekundärvlies (52).

8. Verfahren nach Anspruch 7,
   **dadurch gekennzeichnet, dass**
   das Durchtrennen des Primärvlies in Längsrichtung mit einem Wasserschneidstrahl ausgeführt wird.

9. Mineralwollebahn oder Mineralwolleplatte aus vernetzten Mineralwollefasern mit einer Dichteverteilung über die Dicke (z),

   - wobei der obere Bereich (24b) und der untere Bereich (24b) der Mineralwollebahn oder Mineralwolleplatte jeweils eine höhere Dichte aufweisen als der zwischen dem oberen Bereich und dem unteren Bereich liegenden Zwischenbereich (56), und das Rohmaterial in mindestens einer Zerfaserungseinrichtung (26a, 26b) zerfasert,
   - jeweils in einem Sammelförderer eines Fallschachtes (10) zur Bildung eines Primärvlies (24) abgelegt ist, und
   - zwei Schichten bezüglich der Faserqualität und / oder des Bindemittels identische Eigenschaften aufweisen und die Schichten identische Dichtegradienten aufweisen,

   **dadurch gekennzeichnet dass** die Dichteverteilung über die Dicke(z) der Bahn oder der Platte in dem Zwischenbereich (56) einen Bereich konstanter Dichte aufweist und in dem oberen und unterem Bereich (24b) spiegelbildlich ansteigt.

10. Mineralwollebahn oder Mineralwolleplatte gemäß Anspruch 9, **dadurch gekennzeichnet, dass** die Dichteverteilung im Zwischenbereich (56) einen Minimalwert und in den Randbereichen der oben und untere Bereiche (24b) einen Maximalwert aufweist.

11. Mineralwollebahn oder Mineralwolleplatte gemäß Anspruch 9 oder 10, **dadurch gekennzeichnet, dass** die Mineralwollebahn oder Mineralwolleplatte eine Dichte im Bereich zwischen 4 - 70 kg/m$^3$, bevorzugt 4 - 25 kg/m$^3$ besitzt.

12. Mineralwollebahn oder Mineralwolleplatte gemäß Anspruch 9 bis 11, **dadurch gekennzeichnet, dass** die Dicke der Mineralwollebahn oder Mineralwolleplatte 50-500 mm, vorzugsweise 120 - 360 mm, beträgt.

13. Mineralwollebahn der Mineralwolleplatte gemäß einem der Ansprüche 9 bis 12, **dadurch gekennzeichnet, dass** der obere Bereich (24b) und der untere Bereich (24b) der Mineralwollebahn oder Mineralwolleplatte jeweils einen höheren Bindemittelanteil aufweisen.

14. Mineralwollebahn oder Mineralwolleplatte nach Anspruch 14, **dadurch gekennzeichnet, dass** der Bindemittelanteil im oberen Bereich (24b) und unteren Bereich (24b) etwa 1 % - 4 %, bevorzugt 1 % - 2 %, über dem durchschnittlichen Bindemittelanteil liegt.

15. Mineralwollebahn oder Mineralwolleplatte aus vernetzten Mineralwollefasern mit einer Dichteverteilung über die Dicke (z) gemäß den Ansprüchen 9 bis 14, **dadurch gekennzeichnet, dass** ein mittlerer Dichtebereich von 4 bis 11 kg/m$^3$, bevorzugt 4 bis 9 kg/m$^3$ am meisten bevorzugt 4 bis 6 kg/m$^3$, beträgt, wobei die Bahn oder Platte gleichmäßig querbezogene Massenverteilungen aufweist.

**Claims**

1. An apparatus for producing a mineral wool nonwoven fabric (52) comprising

   - a shroud (10), comprising at least one fiberizing means (26, 26b); and
   - a conveyor means (16) for transporting the produced mineral nonwoven fabric (24); said conveyor means being capable of guiding the first blanket section (38) so that said first blanket section (38) is deposited on a second blanket section (40) to produce a secondary nonwoven (52); the conveying distance of said first blanket section (38) being unequal to the conveying distance of said second blanket section (40);

   **characterised in that**

   - the shroud (10) is double wide;
   - a device (34) is provided for slitting said produced mineral wool non woven fabric in a longitudinal direction into a first blanket section (38) and a second blanket section (40); and
   - said conveyor means (46, 48, 58) comprises for inverting said first blanket section (38) an inverting pulley (46) about which said first blanket section (38) is guidable; said first blanket section (38) being inverted so that the underside of said first blanket section (38) is located upwards; and

   - each of said at least one fiberizing means (26a, 26b) produces a mineral wool nonwoven fabric (24) forming two layers in the secondary nonwoven (52).

2. An apparatus according to Claim 1, **characterised in that** said device (34) for slitting said produced mineral wool nonwoven (24) generates a water cutting jet directed at said mineral wool non woven fabric.

3. An apparatus according to one of Claims 1 or 2, **characterised in that**, in addition, several fiberizing means are arranged staggered in both the conveying direction of said conveyor means (16) and transversely to the conveying direction of said conveyor means (16).

4. An apparatus according to one of the Claims 1 to 3, **characterised in that** several fiberizing means (26a, 26b) are arranged in sequence in the conveying direction (A) of said conveyor means (16) of said shroud .

5. An apparatus according to one of the Claims 1 to 4, **characterised in that** said conveying direction (A) of said produced mineral wool nonwoven (24) in said shroud is substantially perpendicular to the conveying direction (B) of said secondary non woven (52).

6. An apparatus according to one of the Claims 1 to 5, **characterised in that** the difference between the conveying distance of said first blanket section (38) and the conveying distance of said second blanket section (40) equals or exceeds the spacing of said fiberizing means (26a, 26b).

7. A Method for producing mineral wool nonwoven fabric (52) comprising the steps:

   - fiberizing the raw material in at least one fiberizing means (26a., 26b);
   - depositing the fibers on a collection conveyor (16) of a shroud (10) for forming a primary nonwoven (24);
   - slitting said primary nonwoven in longitudinal direction so that a first blanket section (38) and a second blanket section (40) materialise;
   - transporting said first blanket section (38) and said second blanket section (40) such that the conveying distances between shroud and curing oven are longitudinally staggered;
   - inverting said first blanket section (38) so that the underside of said first blanket section (38) is located upwards;

- depositing said first blanket section (38) on said second blanket section (40) to form a secondary nonwoven (52).

8. A method according to Claim 7, **characterised in that** slitting said primary nonwoven in longitudinal direction is executed with a water cutting jet.

9. A mineral wool blanket or mineral wool mat of cross-linked mineral wool fibers including a density distribution across the thickness (z);

- the upper portion (24b) and the lower portion (24b) of said mineral wool blanket or mineral wool mat each exhibiting a density higher than that of the portion (56) located between said upper portion an said lower portion; and fiberizing the raw material in at least one fiberizing mean (26, 26b);
- each of said mineral wool blanket or mineral wool mat being deposit in a collection conveyor (16) of a shroud (10) for forming a primary nonwoven (24); and
- two layers exhibiting identical properties as regards the fiber quality and / or the binder content and the layers exhibiting identical density gradients;

**characterised in that** the density distribution across the thickness (z) of the blanket or the mat comprise in the portion (56) located between said upper portion and said lower portion a value of constant density and that the said density distribution increases in the upper an lower portion (24b) like a mirror-image.

10. Mineral wool blanket or mat according to Claim 9, **characterised in that** the density distribution in the portion (56) located between said upper portion and said lower portion exhibits a minimum value and exhibits a maximum value in the border portion of the upper and the lower portion (24b).

11. Mineral wool blanket or mat according to Claim 9 or 10, **characterised in that** the mineral wool blanket or mineral wool mat has a density in the range of 4 to 70 kg/m$^3$, preferably 4 to 25 kg /m$^3$.

12. Mineral wool blanket or mat according to Claims 9 to 11, **characterised in that** the thickness of said mineral wool blanket or mineral wool mat is in the range 50 to 500 mm, preferably 120 to 360 mm.

13. Mineral wool blanket or mat according to one of Claims 9 to 12, **characterised in that** said upper portion (24b) and said lower portion (24b) of said mineral wool blanket or mineral wool comprises in each case a higher binder content.

14. Mineral wool blanket or mat according to one of Claims 9 to 13, **characterised in that** the binder content in said upper portion and said lower portion is roughly 1% to 4 %, preferably 1 % to 2 % above the average binder content.

15. Mineral wool blanket or mat of cross-linked mineral wool fibers including a density distribution across the thickness (z) according to one of Claims 9 to 14, **characterised in that** the average density is in the range 4 to 11 kg/m$^3$, preferably 4 to 9 kg/m$^3$, most preferably 4 to 6 kg/m$^3$, whereby said blanket or mat comprises homogenous mass distributions transversely.

**Revendications**

1. Dispositif destiné à la production de non-tissés en laine minérale (52) comprenant :

- un puits de chute (10) comprenant
- au moins un dispositif de défibrage (26a, 26b) ainsi que
- un dispositif de transport (16) pour transporter le non-tissé en laine minérale produit (24), le dispositif de transport de la première section de bande (38) pouvant conduire la première section de bande (38) de manière que la première section de bande (38) soit déposée sur la deuxième section de bande (40) pour créer un non-tissé secondaire (52), le chemin de transport de la première section de bande (38) n'étant pas égal au chemin de transport de la deuxième section de bande (40);

**caractérisé par le fait que**

- la largeur du puits de chute est double;
- un dispositif (34) est prévu permettant de diviser le non-tissé en laine minérale produit dans le sens longitudinal en une première section de bande (38) et une seconde section de bande ; et
- le dispositif de transport (46, 48, 58) destiné à faire retourner la première section de bande (38) comprend un rouleau de renvoi (46) autour duquel on peut faire contourner la première section de bande (38), la première section de bande (38) étant tournée de telle manière que la partie inférieure de la première section de bande (38) arrive à être tournée vers le haut et
- chacun des dispositifs de défibrage (26a, 26b), dont au moins un, produit un non-tissé de laine minérale (24) qui forme deux couches dans le non-tissé secondaire.

**2.** Dispositif conformément à la revendication 1, **caractérisé par le fait que** le dispositif (34) servant à diviser le non-tissé en laine minérale (24) produit un jet d'eau coupant pouvant être dirigé sur le non-tissé en laine minérale.

**3.** Dispositif conformément à l'une des revendications 1 ou 2, **caractérisé par le fait qu'**en supplément, plusieurs dispositifs de défibrage sont ordonnés en quinconce les uns par rapport aux autres tout autant dans le sens de transport du dispositif de transport (16) que transversalement par rapport au sens de transport du dispositif de transport (16).

**4.** Dispositif conformément à l'une des revendications 1 à 3, **caractérisé par le fait que** plusieurs dispositifs de défibrage (26a, 26b) sont ordonnés à la suite les uns des autres dans le sens de transport (A) du dispositif de transport (16) du puits de chute.

**5.** Dispositif conformément à l'une des revendications 1 à 4, **caractérisé par le fait que** le dispositif de transport (A) du non-tissé en laine minérale (24) produit se trouve dans le puits de chute essentiellement verticalement par rapport au sens de transport (B) du non-tissé secondaire (52).

**6.** Dispositif conformément à l'une des revendications 1 à 5, **caractérisé par le fait que** le montant de la différence du chemin de transport de la première section de bande (38) vers le chemin de transport de la deuxième section de bande (40) est plus grand ou égal à la distance des dispositifs de défibrage (26a, 26b).

**7.** Procède de production de non-tissé en laine minérale (52) comprenant les étapes suivantes:

- défibrage du matériau à l'état brut dans au moins un dispositif de défibrage (26a, 26b);
- dépôt des fibres sur un convoyeur collecteur (16) d'un puits de chute (10) pour produire un non-tissé primaire (24) ;
- division du non-tissé primaire dans le sens longitudinal de manière qu'une première section de bande (38) et une deuxième section de bande (40) apparaît ;
- transport de la première section de bande (38) et de la deuxième section de bande (40) de manière qu'un décentrage longitudinal des chemins de transport apparaisse entre le puits de chute et le four de trempe;
- renvoi de la première section de bande (38) de manière que le côté inférieur de la première section de bande (38) arrive à se trouver tourné vers le haut;
- Dépose de la première section de bande (38) sur la deuxième section de bande (40) pour former un non-tissé secondaire (52).

**8.** Procède conformément à la revendication 7, **caractérisé par le fait que** la division du non-tissé primaire dans le sens longitudinal est effectué avec un jet d'eau coupant.

**9.** Bande de laine minérale ou plaque de laine minérale en fibres de laine minérale réticulées avec une répartition de densité sur la profondeur (z),

- la zone supérieure (24b) et la zone inférieure (24b) de la bande de laine minérale ou de la plaque de laine minérale indiquant chacune une densité plus importante que la zone intermédiaire (56) se trouvant entre la zone supérieure et la zone inférieure et que le matériau à l'état brut défibre dans au moins un dispositif de défibrage (26a, 26b),
- un puits de chute (10) étant déposé respectivement dans chaque convoyeur collecteur pour la formation du non-tissé primaire (24), et
- les propriétés de deux couches étant identiques du point de vue de la qualité de fibres et / ou du liant et les couches ayant des gradients de densité identiques,

**caractérisée par le fait que** la répartition de la densité sur l'épaisseur (z) de la bande ou de la plaque montre dans la zone intermédiaire (56) une zone de densité constante et qu'elle augmente inversement dans la zone inférieure et celle supérieure (24b).

**10.** Bande de laine minérale ou plaque de laine minérale conformément à la revendication 9, **caractérisée par le fait que** la répartition de la densité indique une valeur minimale dans la zone intermédiaire (56) et une valeur maximale dans les zones supérieure et inférieure (24b).

**11.** Bande de laine minérale ou plaque de laine minérale conformément à la revendication 9 où 10, **caractérisée par le fait que** la bande de laine minérale ou plaque de laine minérale a une densité dans la plage entre 4 - 70 kg/m$^3$, de préférence 4 - 25 kg/m$^3$.

**12.** Bande de laine minérale ou plaque de laine minérale conformément aux revendications 9 à 11, **caractérisée par le fait que** l'épaisseur de la bande de laine minérale ou de la plaque de laine minérale s'élève à 50 - 500 mm, de préférence à 120 - 360 mm.

**13.** Bande de laine minérale ou plaque de laine minérale conformément aux revendications 9 à 12, **caractérisée par le fait que** la zone supérieure (24b) et la zone inférieure (24b) de la bande de laine minérale ou de la plaque de laine minérale a respectivement une part augmentée de liant.

14. Bande de laine minérale ou plaque de laine minérale conformément à la revendication 14, **caractérisée par le fait que** la part de liant dans la zone supérieure (24b) et la zone inférieure (24b) s'élève à env. 1 % - 4 %, de préférence 1 %- 2 % au-dessus de la part moyenne de liant.

15. Bande de laine minérale ou plaque de laine minérale en fibres de laine minérale avec une répartition de densité sur l'épaisseur (z) conformément aux revendications 9 à 14, **caractérisée par le fait qu'**une zone de densité centrale s'élève entre 4 à 11 kg/m$^3$, de préférence 4 à 9 kg/m$^3$, de plus grande préférence de 4 à 6 kg/m$^3$, la bande ou la plaque ayant des répartitions de masse régulières par rapport à la transversale.

Fig. 1

EP 1 115 931 B1

EP 1 115 931 B1

Fig. 1a

Fig. 1b

16

## Fig. 2

Fig. 3

EP 1 115 931 B1

# Fig. 4

# Fig. 5

a)

b)